# EUROPÄISCHE PATENTSCHRIFT

(11) **EP 2 697 784 B1**
(45) Veröffentlichungstag und Bekanntmachung des Hinweises auf die Patenterteilung: **25.07.2018**
(21) Anmeldenummer: 12715021.7
(22) Anmeldetag: 03.04.2012
(51) Int. Cl.: G07C 9/00, B60R 25/00

(54) **ID-GEBER FÜR EIN KRAFTFAHRZEUG-ZUGANGSSYSTEM MIT EINER ABNEHMBAREN NFC-BAUGRUPPE**
ID SIGNAL GENERATOR FOR A MOTOR VEHICLE ACCESS SYSTEM HAVING A REMOVABLE NFC ASSEMBLY
ÉMETTEUR D'IDENTIFICATION POUR UN SYSTÈME D'ACCÈS À UN VÉHICULE AUTOMOBILE ÉQUIPÉ D'UN MODULE NFC AMOVIBLE

(30) Priorität: 15.04.2011 DE 102011002113; 02.12.2011 DE 102011055994; 10.01.2012 DE 102012100163
(43) Veröffentlichungstag der Anmeldung: 19.02.2014
(73) Patentinhaber: Huf Hülsbeck & Fürst GmbH & Co. KG, 42551 Velbert (DE)
(72) Erfinder: ZILLER, Boris, 40885 Ratingen (DE); MÖNIG, Stefan, 58332 Schwelm (DE); GORENZWEIG, Igor, 42109 Wuppertal (DE); GELDMACHER, Alexander, 42113 Wuppertal (DE); SIMON, Jörg, 42489 Wülfrath (DE)
(74) Vertreter: Zenz Patentanwälte Partnerschaft mbB
(86) Internationale Anmeldenummer: PCT/EP2012/056100
(87) Internationale Veröffentlichungsnummer: WO 2012/139938

(56) Entgegenhaltungen:
- EP-A1- 2 172 910
- EP-A1- 2 355 460
- EP-A1- 2 412 586
- EP-A2- 1 564 828
- EP-A2- 1 798 867
- WO-A1-02/051676
- WO-A1-03/067539
- WO-A1-2011/131750
- WO-A1-2012/139802
- DE-A1-102009 057 060
- US-A1- 2010 093 412

## Beschreibung

Die Erfindung betrifft einen ID-Geber für ein Kraftfahrzeug-Zugangssystem mit einem Kunststoff-Gehäuse und einer von dem Gehäuse umschlossenen, mit Bauelementen bestückten Leiterplatine, wobei die Bauelemente unter anderem eine Spannungsversorgungszelle mit einer zugehörigen Halterung, eine LF-Spulenanordnung und HF-Sende- und -Empfangsbauelemente zur Kommunikation mit kraftfahrzeugseitigen Sende- und Empfangseinrichtungen und wenigstens ein Controller-Bauelement umfassen.

ID-Geber der eingangs genannten Art sind allgemein bekannt. Die im Prioritätsintervall des vorliegenden Patents veröffentlichte Patentanmeldung DE 10 2010 061 351.7, beschreibt eine Verbesserung an einem solchen bekannten ID-Geber, bei der einerseits ein kompakter ID-Geber mit einer Leiterplatine minimaler Größe geschaffen und andererseits der ID-Geber mit einer NFC-Kommunikationsmöglichkeit ausgerüstet wird. Der dort beschriebene ID-Geber enthält in einem Kunststoffgehäuse eine Leiterplatine, auf deren Oberseite eine LF-Spulenanordnung zum Empfangen eines kraftfahrzeugseitig abgestrahlten Wecksignals im LF-Frequenzbereich, eine Halterung zur Aufnahme einer Batterie und eine NFC-Chipkartenaufnahme montiert sind.

Weitere Bauelemente sind auf der Rückseite der Leiterplatine angeordnet, so beispielsweise ein Controller, ein Transceiver zur bidirektionalen Kommunikation mit einer kraftfahrzeugseitigen Sende- und Empfangseinrichtung im HF-Frequenzbereich und ein zugehöriger Schwingquarz. Benachbart zur Rückseite der Leiterplatine und im Wesentlichen parallel zu der Leiterplatte kann eine Antennenbaueinheit, z.B. in Form einer Leiterzüge tragenden Trägerfolie angeordnet sein. Die Leiterzüge der Antennenbaueinheit umfassen eine NFC-Antennenspule, die über Leitbahnen der Leiterplatine mit Anschlüssen der NFC-Chipkartenaufnahme gekoppelt ist. Bei diesem ID-Geber kann die Chipkartenaufnahme eine NFC-Chipkarte, die auch als "NFC secure element" bezeichnet wird und beispielsweise das Format einer Micro-SD-Karte hat, eingelegt werden. Die NFC-Chipkarte enthält Sende- und Empfangsschaltungen zur Hochfrequenzkommunikation, Schaltungen zum Verschlüsseln und Entschlüsseln der übertragenen Signale und Controller- und Schnittstellenschaltungen. Beim Einlegen in die Aufnahme wird die NFC-Chipkarte mit der NFC-Antennenspule innerhalb des ID-Gebers gekoppelt. In dieser Patentanmeldung ist angegeben, dass die NFC-Chipkarte regelmäßig selbst mit einer Antenne ausgestattet sei, die Ankopplung der NFC-Antennenspule des ID-Gebers aber der Erhöhung der Kommunikationsreichweite diene.

Obwohl die NFC-Funktionalität in einem ID-Geber oder Fahrzeugschlüssel wünschenswert ist, bringt die dauerhafte Verbindung zwischen NFC-Funktion und Schlüssel verschiedene Nachteile mit sich. Einerseits ist eine Nachrüstung der NFC-Funktion bei Schlüsseln problematisch. Andererseits ist ein Chipwechsel nur aufwändig zu realisieren, was z.B. beim Fahrzeugverkauf Probleme bereiten kann.

Aus der im Prioritätsintervall des vorliegenden Patents veröffentlichten EP 2 355 460 A1 ist eine Kommunikationsvorrichtung in Gestalt eines Moduls bekannt, welches an ein elektronisches Gerät zeitweise angebracht werden kann.

Die im Prioritätsintervall des vorliegenden Patents veröffentlichte DE 10 2009 057 060 A1 offenbart einen Fahrzeugschlüssel mit einer Aufnahme für eine fernabfragbare Karte, wobei die Aufnahme von einer in dem Schlüssel integrierten Logik elektrisch getrennt ist. Die US 2010/0093412 offenbart einen ID-Geber gemäß dem Oberbegriff des Anspruchs 1. Es ist daher Aufgabe der Erfindung, einen ID-Geber zu schaffen, der eine NFC-Kommunikationsmöglichkeit mit flexibler Montage- und Austauschmöglichkeit aufweist.

Diese Aufgabe wird erfindungsgemäß durch einen ID-Geber mit den Merkmalen des Anspruchs 1 gelöst.

Der erfindungsgemäße ID-Geber für ein Kraftfahrzeug-Zugangssystem weist ein Kunststoff-Gehäuse, eine von dem Gehäuse umschlossene, mit Bauelementen bestückte Leiterplatine und einen in einer Gehäuseausnehmung montierten und abnehmbaren Gehäusedeckel auf. Die Bauelemente der Leiterplatine umfassen unter anderem eine Spannungsversorgungszelle mit einer zugehörigen Halterung, eine LF-Spulenanordnung und HF-Sende- und Empfangsbauelemente zur Kommunikation mit kraftfahrzeugseitigen Sende- und Empfangseinrichtungen und wenigstens ein Controller-Bauelement.

In dem in einer Gehäuseausnehmung montierten und abnehmbaren Gehäusedeckel ist eine NFC-Baugruppe integriert.

Weil der Gehäusedeckel zur Trennung von dem ID-Geber vorgesehen ist, kann dieser problemlos ausgetauscht werden, z.B. um eine NFC-Schaltung oder andere NFC-Schaltung, z.B. mit einen neuen NFC-Chip mitsamt neuem Deckel mit dem ID-Geber zu koppeln. Außerdem kann ein ID-Geber zunächst mit einem Gehäusedeckel ohne NFC-Funktionalität ausgeliefert werden und der Ersatz dieses Gehäusedeckels durch den Deckel mit NFC-Funktionalität zu Bildung des erfindungsgemäßen ID-Gebers ist problemlos nachzurüsten. Ebenso ist die NFC-Funktionalität, z.B. beim Fahrzeugverkauf auch wieder von dem ID-Geber zu trennen.

Die Erfindung hat unter anderem den Vorteil, dass der Besitzer des ID-Gebers diesen an einen Dritten (beispielsweise eine Kfz-Werkstatt) weitergeben kann, ohne dass er zugleich seine NFC-Baugruppe weiterzugeben braucht, und dass der Inhaber dennoch mit der entnommenen NFC-Baugruppe eine NFC-Kommunikation ausführen kann, also die NFC-Baugruppe benutzen kann.

Der Deckel kann die gesamten NFC-Komponenten und Baugruppen gekapselt und versiegelt enthalten, um auf diese Weise eine hermetisch gedichtetes NFC-Objekt mit NFC-Identität zur sicheren Befestigung am Fahrzeugschlüssel anzubringen. Der Gehäusedeckel erfüllt dann zusätzlich zu seiner Deckelfunktion auch eine Kommunikations- oder Identifizierungsfunktion, jedoch jederzeit trennbar vom Schlüssel mit der übrigen Funktionalität.

Gemäß der Erfindung ist die gesamte NFC-Baugruppe, also NFC-Chip und zugehörige NFC-Schaltung, insbesondere auch die NFC-Antenne entnehmbar und austauschbar.

In jedem Fall ist die NFC-Identität von dem Schlüssel trennbar, da die Komponente, welche die NFC-Identität enthält (der Chip) mit dem Gehäusedeckel vom Schlüssel entfernbar ist. Außerdem ist auch die NFC-Identität vom Gehäusedeckel selbst trennbar, da wenigstens die NFC-Komponente, welche die NFC-Identität enthält (der Chip), als vom Gehäusedeckel trennbare Komponente ausgebildet ist. Schließlich ist es auch möglich, den Gehäusedeckel zu ersetzen, die NFC-Identität jedoch beizubehalten, da diese in einen Ersatzdeckel wiederum einsetzbar ist.

Die Aufnahme weist eine Zugangsöffnung (Fenster) auf, die zur Einschuböffnung der Aufnahme beabstandet ist. Die vollständig in die Aufnahme eingeschobene NFC-Baugruppe erstreckt sich bei zu der Zugangsöffnung und ist über die Zugangsöffnung im eingeschobenen Zustand zugänglich, um (z.B. mit dem Fingernagel) aus der Aufnahme herausgeschoben zu werden.

Es ist vorteilhaft, wenn die NFC-Baugruppe einen Energiespeicher in Gestalt eines Kondensators und/oder Spannungsversorgungszelle umfasst, wobei der Energiespeicher mit weiteren Kontakten der NFC-Aufnahme gekoppelt ist.

Da es dem NFC-Chip in seiner einfachstes erfindungsgemäßen Gestaltung an der erforderlichen Batterie-Spannungsversorgung fehlt, ist eine Kommunikation nur im Transponderbetrieb möglich, wobei Energie über das HF-Feld zum NFC-Chip übertragen wird.

Dies kann aber durch den in der NFC-Baugruppe enthaltenen kleineren Energiespeicher (beispielsweise einen Kondensator) ausgeglichen werden. Verfügt die NFC-Baugruppe selbst über einen Energiespeicher ist eine weitere Unabhängigkeit von dem ID-Geber gegeben.

Der abnehmbare Gehäusedeckel muss von ausreichender Größe sein, um die NFC-Antennenspule aufnehmen zu können. Vorzugsweise ist der Gehäusedeckel flächig an einer Seite des ID-Gebers vorgesehen und die Leiterzüge der NFC-Antennenspule sind in der Fläche des Gehäusedeckels benachbart zu seinem Rand angeordnet, so dass ein größtmöglicher Windungsdurchmesser erzielt wird.

Bei einer bevorzugten Ausführungsform des ID-Gebers weist der ID-Geber auf einer Frontseite wenigstens eine vom Bediener betätigbare Taste auf und ist der abnehmbare Gehäusedeckel Teil der Rückwand des ID-Gebers. Vorzugsweise deckt der abnehmbare Gehäusedeckel einen Innenraum des ID-Gebers, insbesondere ein Batteriefach, ab, in dem die Spannungsversorgungszelle untergebracht ist.

Die Einschuböffnung kann auch in einem anderen Bereich angeordnet sein, z.B. auf der zur Innenseite des ID-Gebers hingewandten Seite, welche bei eingesetztem Deckel nicht zugänglich ist.

In dieser Gestaltung ist es auch möglich, die NFC-Aufnahme derart anzuordnen, dass sie bei Demontiertem Deckel offen zugänglich ist, bei eingesetztem Deckel jedoch geschützt. Diese Anordnung ist vergleichbar mit der Anordnung einer Chipkarte in einem Mobiltelefon, wo ebenfalls der Zugang erst nach Abnahme des Batteriefachdeckels zugänglich ist. Bei der Erfindung ist jedoch die NFC-Aufnahme im Deckel selbst angeordnet, zusammen mit den übrigen, die NFC-Funktion bereitstellenden Komponenten.

Zwischen dem abnehmbaren Gehäusedeckel und dem Innenraum ist vorzugsweise eine dem Innenraum im Falle einer Entnahme des Gehäusedeckels schützende und abdichtende Schutzabdeckung vorgesehen. Vorzugsweise liegt der montierte Gehäusedeckel an der Schutzabdeckung an. Bei dieser bevorzugten Ausführungsform kann der die NFC-Baugruppe aufnehmende abnehmbare Gehäusedeckel im Wesentlichen die gesamte Rückwandfläche des ID-Gebers einnehmen, so dass die darin untergebrachte NFC-Antennenspule, die umlaufend in der Nähe des Randes des Gehäusedeckels untergebracht ist, eine maximale Fläche einnehmen kann. Dies dient der Erhöhung der Kommunikationsreichweite. Zugleich kann der Gehäusedeckel bei dieser Ausführungsform als stabile Batteriefach-Abdeckung dienen.

Damit im Falle seiner vorübergehenden Entnahme das Batteriefach bzw. der Innenraum nicht gegenüber Einwirkungen von Schmutz oder Feuchtigkeit ungeschützt bleibt, ist vorzugsweise die Schutzabdeckung vorgesehen, die zwar eine geringere mechanische Stabilität als der Gehäusedeckel aufweist, aber nur vorübergehend im Falle einer kurzzeitigen Entnahme des Gehäusedeckels als alleiniger Schutz verbleibt.

Bei einer bevorzugten Ausführungsform des ID-Gebers weist der Gehäusedeckel zusätzlich einen USB-Anschluss auf, der mit der NFC-Baugruppe verbunden ist. Der USB-Anschluss kann auch unmittelbar an einer Aufnahme für das NFC-Chip vorgesehen sein. Vorzugsweise ist der USB-Anschluss auch bei montiertem Gehäusedeckel zugänglich, das heißt, an einer außen zugänglichen Fläche des Gehäusedeckels vorgesehen. Der USB-Anschluss bietet eine weitere Möglichkeit zum Datenaustausch mit der NFC-Baugruppe bei gleichzeitiger Spannungsversorgung.

Vorzugsweise umfasst die NFC-Baugruppe zwischen der Antennenspule und dem NFC-Chip eingekoppelte Anpassungsbauelemente.

Bei einer vorteilhaften Weiterbildung des erfindungsgemäßen ID-Gebers ist das Controller-Bauelement derart mit den Kontakten gekoppelt und konfiguriert, dass das Vorhandensein des Gehäusedeckels in der Gehäuseausnehmung erkannt und nach dem Einlegen des Gehäusedeckels in die Gehäuseausnehmung ein Signalaustausch zwischen der NFC-Baugruppe und dem Controller-Bauelement zum Anmelden der NFC-Baugruppe ausgeführt wird.

Vorteilhafte und/oder bevorzugte Weiterbildungen der Erfindung sind in den Unteransprüchen gekennzeichnet.

Nachfolgend wird die Erfindung anhand eines in den Zeichnungen dargestellten bevorzugten Ausführungsbeispiels näher beschrieben. In den Zeichnungen zeigen:

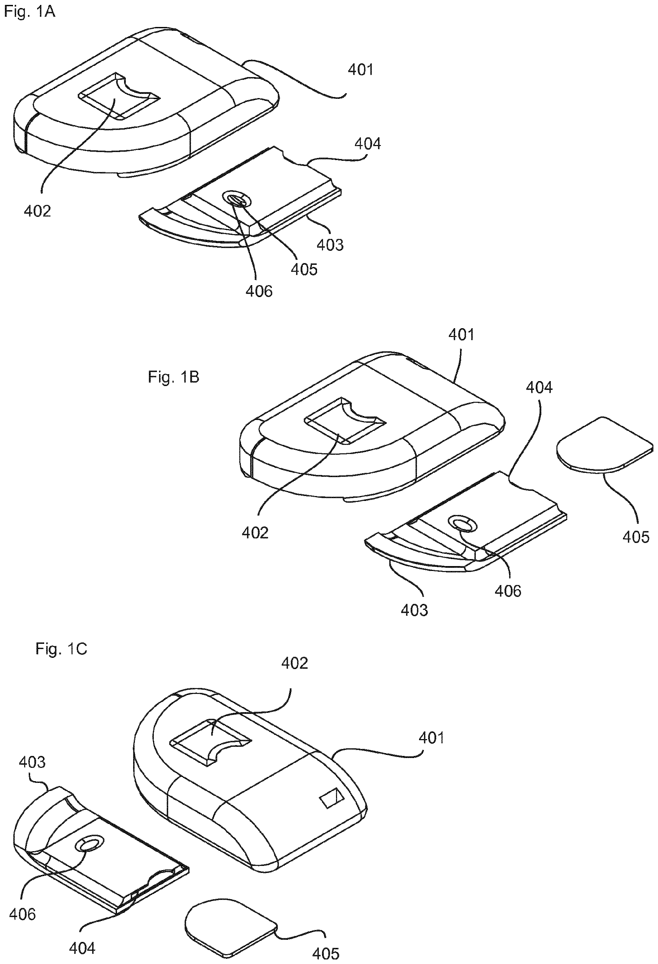

Die Figuren 1A bis 1C zeigen eine Ausführungsform gemäß der Erfindung.

In Figur 1a ist der ID-Geber 401 mit entferntem Gehäusedeckel 403 dargestellt. Ein Bedienknopf 402, z.B. für die Betätigung einer Zentralverriegelung ist auf der Oberseite angeordnet.

In seiner Anordnung am Gehäuse entspricht der Deckel 403 dem vorhergehenden Ausführungsbeispiel.

In dieser Gestaltung weist der Deckel 403 jedoch eine deutlich größere Aufnahme 404 auf. In diese Aufnahme 404 wird eine gesamte NFC-Baugruppe eingeschoben. Diese ist in diesem Beispiel als Karte 405 geringer Dicke (z.B. 1mm) mit sämtlichen NFC-Komponenten ausgebildet. Die Antenne sowie die NFC-Chipkarte und damit die NFC-Identität sind in der Karte 405 gekapselt.

Diese Karte wird in die Aufnahme 404 des Gehäusedeckels 403 eingeschoben, um den ID-Geber 401 mit NFC-Funktionalität auszurüsten. Die Aufnahme weist ein Fenster 406 zur Einschuböffnung der Aufnahme 404 auf. In diesem Fenster ist ein Ende der Karte 405 im eingeschobenen Zustand zugänglich, um, z.B. mit dem Fingernagel, aus der Aufnahme herausgeschoben zu werden.

Der Deckel 403 kann also vollständig ohne Elektronik, ohne Komponenten der NFC-Baugruppe ausgebildet sein, jedoch mit einer angepassten Aufnahme, welche eine vollständige Baugruppe 405 aufnehmen kann.

Die NFC-Baugruppe kann neben den gezeigten Beispielen im Übrigen in beliebiger Weise im Gehäusedeckel angeordnet sein. Es kann beispielsweise die gesamte Baugruppe, ggf. mit darin installiertem NFC-Chip, in Gestalt eines Aufklebers in den Gehäusedeckel eingeklebt werden. Ist der Chip schon in der Aufnahme enthalten, kann so eine wasserdichte NFC-Funktion bereitgestellt werden. Grundsätzlich kann auch statt der Aufnahme ein festkontaktierter Chip verwendet werden, wobei dann der Deckel z.B. mitsamt dem Chip an einen Benutzer ausgegeben wird.

Die Antenne kann ebenfalls in vielfältiger Weise gestaltet sein, beispielsweise als Folienantenne oder als Leiterbahnen auf einer Platine, welche im Deckel aufgenommen ist.

Es kann außerdem ein Chip mit einer integrierten Antenne verwendet werden. Außerdem kann eine Chipkarte mit Integrierter NFC-Antenne als Folienverbund in den Deckel eingebracht werden.

## Patentansprüche

1. ID-Geber (401) für ein Kraftfahrzeug-Zugangssystem, aufweisend:
ein Kunststoff-Gehäuse,
eine von dem Gehäuse umschlossene, mit Bauelementen bestückte Leiterplatine, wobei die Bauelemente unter anderem eine Spannungsversorgungszelle mit einer zugehörigen Halterung und HF-Sende-und-Empfangsbauelemente zur Kommunikation mit kraftfahrzeugseitigen Sende- und Empfangseinrichtungen und wenigstens ein Controller-Bauelement umfassen,
wobei ein in einer Gehäuseausnehmung montierter und abnehmbarer Gehäusedeckel (403) ausgebildet ist, und in dem abnehmbaren Gehäusedeckel (403) eine NFC-Baugruppe integriert ist,
wobei der Gehäusedeckel eine zugängliche Ausnehmung (404) aufweist, in welche die komplette NFC-Baugruppe (405) entnehmbar einsetzbar ist, wobei die NFC-Baugruppe einen NFC-Chip und eine NFC-Antennenspule aufweist.
**dadurch gekennzeichnet,**
**dass** die Ausnehmung eine Einschuböffnung (404) aufweist und eine zur Einschuböffnung beabstandete Zugangsöffnung (406), die einen Durchgang zur Ausnehmung bildet, wobei sich die vollständig eingeschobene NFC-Baugruppe (405) in der Ausnehmung bis zur Zugangsöffnung (406) erstreckt, so dass ein Ende der NFC-Baugruppe (405) in der Zugangsöffnung zugänglich ist und die eingeschobene NFC-Baugruppe (405) über die Zugangsöffnung (406) in Richtung der Einschuböffnung (404) bewegbar ist.

2. ID-Geber nach Anspruch 1, **dadurch gekennzeichnet, dass** der abnehmbare Gehäusedeckel (403) einen Innenraum des ID-Gebers (401), insbesondere ein Batteriefach, abdeckt, in dem die Spannungsversorgungszelle untergebracht ist.

3. ID-Geber nach einem der Ansprüche 1 bis 2, **dadurch gekennzeichnet, dass** eine NFC-Einschuböffnung, in welche die komplette NFC-Baugruppe (405) entnehmbar einsetzbar ist, in einem Bereich des Gehäusedeckels angeordnet ist, welcher nur zugänglich ist, wenn der Gehäusedeckel von dem ID-GeberGehäuse demontiert ist.

4. ID-Geber nach Anspruch 2, **dadurch gekennzeichnet, dass** zwischen dem abnehmbaren Gehäusedeckel (403) und dem Innenraum eine den Innenraum im Falle einer Entnahme des Gehäusedeckels (403) schützende und abdichtende Schutzabdeckung vorgesehen ist, wobei der montierte Gehäusedeckel (403) der Schutzabdeckung anliegt.

5. ID-Geber nach Anspruch 1, **dadurch gekennzeichnet, dass** der Gehäusedeckel (403) einen USB-Anschluss aufweist, der mit der NFC-Baugruppe (405) verbunden ist.

## Claims

1. ID signal generator (401) for a motor vehicle access system, having
a plastic housing,
a printed circuit board, which is enclosed by the housing and populated with components, wherein the components comprise, inter alia, a voltage supply cell with an associated mounting, and HF transceiver components for communicating with motor-vehicle-side transceiver devices, and at least one controller component,
wherein a removable housing cover (403) is mounted in a recess of the housing, and an NFC assembly is integrated in the removable housing cover (403),
wherein the housing cover has an accessible recess (404) into which the entire NFC assembly (405) can be removably inserted, wherein the NFC assembly has an NFC chip and an NFC antenna coil,
**characterized in that**
the recess has an insertion opening (404) and an access opening (406), which is spaced apart from the insertion opening and forms a passage to the recess, wherein the fully inserted NFC assembly (405) extends in the recess as far as the access opening (406), so that one end of the NFC assembly (405) is accessible in the access opening and the inserted NFC assembly (405) is movable through the access opening (406) in the direction of the insertion opening (404).

2. ID signal generator according to Claim 1,
**characterized in that**
the removable housing cover (403) covers an interior space of the ID signal generator (401), in particular a battery compartment, in which the voltage supply cell is accommodated.

3. ID signal generator according to any one of Claims 1 to 2,
**characterized in that**
an NFC insertion opening, into which the entire NFC assembly (405) can be removably inserted, is arranged in a region of the housing cover that is only accessible when the housing cover is disassembled from the ID signal generator housing.

4. ID signal generator according to Claim 2,
**characterized in that**
between the removable housing cover (403) and the interior space, a protective covering is provided which protects and seals the interior space when the housing cover (403) is removed, wherein the assembled housing cover (403) adjoins the protective covering.

5. ID signal generator according to Claim 1,
**characterized in that**
the housing cover (403) has a USB connector, which is connected to the NFC assembly (405).

## Revendications

1. Emetteur d'identification (401) pour un système d'accès à un véhicule automobile, comportant :
un boîtier en matière plastique,
une carte de circuits imprimés équipée de composants, entourée par le boîtier, les composants comprenant entre autres un élément d'alimentation en tension avec une fixation correspondante et des éléments HF émetteurs et récepteurs pour la communication avec des dispositifs d'émission et de réception côté véhicule automobile et au moins un composant contrôleur,
un couvercle de boîtier (403) amovible et monté dans un évidement de boîtier étant constitué,
et un module NFC (communication en champ proche) étant intégré dans le couvercle de boîtier amovible (403),
le couvercle de boîtier comportant un évidement (404) accessible dans lequel le module NFC complet (405) peut être inséré pouvant être enlevé, le module NFC comportant une puce NFC et une bobine d'antenne CCP,
**caractérisé en ce que**
l'évidement comporte une ouverture d'introduction (404) et une ouverture d'accès (406) à distance de l'ouverture d'introduction qui forme un passage vers l'évidement, le module NFC (405) complètement introduit s'étendant dans l'évidement jusqu'à l'ouverture d'accès (406) de telle sorte qu'une extrémité du module NFC (405) est accessible dans l'ouverture d'accès et le module NFC (405) introduit peut être déplacé par l'ouverture d'accès (406) en direction de l'ouverture d'introduction (404).

2. Emetteur d'identification selon la revendication 1, **caractérisé en ce que** le couvercle de boîtier amovible (403) recouvre un espace intérieur de l'émetteur d'identification (401), notamment un compartiment de batterie, dans lequel est logée l'élément d'alimentation en tension.

3. Emetteur d'identification selon l'une quelconque des revendications 1 à 2, **caractérisé en ce qu'**une ouverture d'introduction NFC, dans laquelle le module NFC complet (405) peut être inséré pouvant être enlevé, est disposée dans une zone du couvercle de boîtier, laquelle n'est accessible que lorsque le couvercle de boîtier du boîtier d'émetteur d'identification est démonté.

4. Emetteur d'identification selon la revendication 2, **caractérisé en ce qu'**entre le couvercle de boîtier amovible (403) et l'espace intérieur, est prévue une couverture de protection étanchéifiant et protégeant l'espace intérieur en cas d'enlèvement du couvercle de boîtier (403) est prévue, le couvercle de boîtier (403) monté venant s'appliquer sur la couverture de protection.

5. Emetteur d'identification selon la revendication 1, **caractérisé en ce que** le couvercle de boîtier (403) comporte une connexion USB qui est reliée au module NFC (405) .
